(19) Europäisches Patentamt / European Patent Office / Office européen des brevets

(11) **EP 3 165 568 A1**

(12) **EUROPEAN PATENT APPLICATION**
published in accordance with Art. 153(4) EPC

(43) Date of publication:
**10.05.2017 Bulletin 2017/19**

(51) Int Cl.:
*C08L 27/18* (2006.01)   *C08F 259/08* (2006.01)
*C08J 9/12* (2006.01)   *C08L 51/00* (2006.01)
*H01B 7/02* (2006.01)

(21) Application number: **15814211.7**

(22) Date of filing: **02.07.2015**

(86) International application number:
**PCT/JP2015/069153**

(87) International publication number:
**WO 2016/002887 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.07.2014 JP 2014138959**
**22.05.2015 JP 2015104739**

(71) Applicant: **Asahi Glass Company, Limited**
**Tokyo 100-8405 (JP)**

(72) Inventors:
• **TERADA, Tatsuya**
  **Tokyo 100-8405 (JP)**
• **SATO, Takashi**
  **Tokyo 100-8405 (JP)**

(74) Representative: **Müller-Boré & Partner**
**Patentanwälte PartG mbB**
**Friedenheimer Brücke 21**
**80639 München (DE)**

(54) **FLUORORESIN COMPOSITION, PRODUCTION METHOD FOR SAME, MOLDED ARTICLE, MOLDED FOAM ARTICLE, AND COATED ELECTRIC WIRE**

(57)   To provide a fluororesin composition excellent in elongation deformability and excellent in mechanical strength of its molded product. The fluororesin composition comprises: a copolymer (A) comprising units derived from a monomer (a), units derived from a monomer (b) and units derived from a monomer (c); and a copolymer (B) comprising units derived from the monomer (a) and units derived from the monomer (b) but containing substantially no units derived from the monomer (c). In the copolymer (A), the molar ratio of units derived from the monomer (a) to units derived from the monomer (b) is from 20/80 to 80/20; the proportion of units derived from the monomer (c) to all units is from 0.2 to 3 mol%; MFR is at most 0.5 dg/min; the proportion of the copolymer (A) to the total of the copolymer (A) and the copolymer (B) is from 4 to 30 mass%; and fish eyes are present in an amount of less than 200 fish eyes per square meter. Monomer (a): tetrafluoroethylene; Monomer (b): ethylene; Monomer (c): a monomer containing two or more polymerizable carbon-carbon double bond.

Printed by Jouve, 75001 PARIS (FR)

**Description**

TECHNICAL FIELD

The present invention relates to a fluororesin composition and a method for its production, as well as a molded product, a foamed molded product and a covered electric wire.

BACKGROUND ART

An ethylene-tetrafluoroethylene copolymer (hereinafter referred to as ETFE copolymer) is excellent in heat resistance, chemical resistance, weather resistance, etc. and thus is widely used as material for e.g. films, foams, bottles, fibers, tubes, pipes, etc.

However, ETFE copolymer has such a problem that it is poor in elongation deformability as compared with other thermoplastic resins. For example, in blow molding, inflation molding or film molding (T-die cast molding), the thickness of the obtainable molded product tends to be uneven. In melt spinning, the diameter of the obtainable fiber tends to be uneven. In film molding (T-die cast molding), neck-in, deformation (waviness, rough skin, etc.), etc. are likely to occur. In melt-blow molding, it tends to be difficult to form good foams. That is, foams tend to be large, the size of foams tends to be non-uniform, the specific gravity of the foamed product tends to be high, the porosity tends to be low, the foam number density tends to be low, and the foam expansion ratio tends to be low.

In order to improve the blow moldability or inflation moldability of ETFE copolymer, it is known to be effective to increase the melt tension of ETFE copolymer.

For example, in Patent Documents 1 and 2, it is disclosed that by introducing a branched structure into ETFE copolymer, the melt tension is increased so as to bring the ratio (X/W) of the melt tension (XmN) to the load (Wkg) at the time of measuring the melt tension, to be at least 0.8.

However, such introduction of a branched structure into ETFE copolymer is likely to bring about such a problem that the mechanical strength (such as the bending resistance) of the molded product tends to be low. Further, when the introduction amount of the branched structure is increased, the melt flowability decreases, so that it becomes impossible to conduct melt molding. Therefore, by this technique, it is not possible to make elongation deformability so high.

Non-Patent Document 1 discloses that to ETFE copolymer wherein the molar ratio of tetrafluoroethylene to ethylene is substantially 1:1, ETFE copolymer having a branched structure introduced by charging 0.10 mol% of a divinyl monomer during its polymerization, is blended.

However, the composition obtained by this technique is insufficient in elongation deformability.

PRIOR ART DOCUMENTS

PATENT DOCUMENTS

Patent Document 1: WO2009/096544
Patent Document 2: WO2009/096547

NON-PATENT DOCUMENT

Non-Patent Document 1: Satoru Imai et al., "Effects of long chain branching of ETFE on the melt viscosity characteristics", the 19th Plastic Molding Society Fall Meeting, Molding Symposia '11 Proceedings, 2011, p. 347-348

DISCLOSURE OF INVENTION

TECHNICAL PROBLEM

It is an object of the present invention to provide a fluororesin composition excellent in elongation deformability and excellent in mechanical strength of its molded product, and a method for its production; and a method for producing a copolymer mixture useful as a raw material for the fluororesin composition; as well as a molded product, a foamed molded product and a covered electric wire, using the fluororesin composition.

SOLUTION TO PROBLEM

The present invention has the following aspects.

[1] A fluororesin composition made of a non-melt microblend of the following copolymer (A) and the following copolymer (B), wherein the proportion of the copolymer (A) to the total amount of the copolymer (A) and the copolymer (B) in the non-melt microblend is from 4 to 70 mass%:

Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%,

Copolymer (B): a copolymer comprising units derived from the following monomer (a) and units derived from the following monomer (b) and containing substantially no units derived from the following monomer (c), wherein the molar ratio [units derived from monomer (a)/units derived from monomer (b)] of units derived from the monomer (a) to units derived from the monomer (b) is from 20/80 to 80/20,

Monomer (a): tetrafluoroethylene,

Monomer (b): ethylene,

Monomer (c): a monomer having two or more polymerizable carbon-carbon double bonds.

[2] The fluororesin composition according to [1], wherein the monomer (c) is a compound represented by the following formula (c1):

$$Y^1\text{-}R^f\text{-}Z^1 \qquad (c1)$$

wherein $R^f$ is a fluoroalkylene group, and $Y^1$ and $Z^1$ are each independently a vinyl group, a trifluorovinyl group or a trifluorovinyloxy group.

[3] The fluororesin composition according to [1] or [2], wherein the monomer (c) is a compound represented by $CH_2=CH\text{-}(CF_2)_{n2}\text{-}CH=CH_2$ (wherein n2 is 4 or 6).

[4] The fluororesin composition according to any one of [1] to [3], wherein the following melt flow rate of the copolymer (A) is at most 0.5 dg/min:

Melt flow rate: the mass of the copolymer (A) flowing out from an orifice having a diameter of 2 mm and a length of 8 mm for 10 minutes, as measured under conditions of a temperature of 297°C and a load of 49 N, in accordance with ASTM D 3159-10.

[5] The fluororesin composition according to any one of [1] to [4], wherein the non-melt microblend is a copolymer mixture obtained by forming the copolymer (A) by copolymerizing the monomer (a), the monomer (b) and the monomer (c) in the presence of the copolymer (B).

[6] A second fluororesin composition characterized by comprising a first fluororesin composition as defined in any one of [1] to [5] and the copolymer (B), wherein the proportion of the copolymer (A) to the total of the copolymer (A) and the copolymer (B) is from 4 to 30 mass%.

[7] The fluororesin composition according to [6], wherein the second fluororesin composition is a melt-kneaded product of said first fluororesin composition and said copolymer (B).

[8] A fluororesin composition comprising the following copolymer (A) and the following copolymer (B), wherein the proportion of the copolymer (A) to the total amount of the copolymer (A) and the copolymer (B) is from 4 to 30 mass%, and the number of the following fish eyes is less than 200/m²:

Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%, and the following melt flow rate is at most 0.5 dg/min:

Copolymer (B): a copolymer comprising units derived from the following monomer (a) and units derived from the following monomer (b) and containing substantially no units derived from following monomer (c), wherein the molar ratio [units derived from monomer (a)/units derived from monomer (b)] of units derived from the monomer (a) to units derived from the monomer (b) is from 20/80 to 80/20:

>Monomer (a): tetrafluoroethylene,
>Monomer (b): ethylene,
>Monomer (c): a monomer having two or more polymerizable carbon-carbon double bonds,

>Melt flow rate: the mass of the copolymer (B) flowing out from an orifice having a diameter of 2 mm and a length of 8 mm for 10 minutes, as measured under conditions of a temperature 297°C and a load of 49 N in accordance with ASTM D 3159-10,
>Fish eyes: using a single screw extruder (manufactured by Tanabe Plastics Machinery Co., Ltd.), the fluororesin composition is extrusion-molded under the following film forming conditions to prepare a film having a thickness of 200 $\mu$m, whereupon the number of fish-eyes with a size of at least 0.05 mm$^2$ present in a region with an area of 0.25 m$^2$ randomly selected from the surface of said film, is visually measured, and the measured number is quadrupled to calculate the number (number/m$^2$) of fish eyes per 1 m$^2$,
>(Film forming conditions)

>>Temperature: C1/C2/C3/die = 300°C/300°C/300°C/300°C, L/D: 25,
>>cylinder diameter: 30 mm,
>>screw: full flight,
>>compression ratio: 3.2,
>>screw rotation speed: 14 rpm,
>>die width: 150 mm,
>>air gap: 23 mm,
>>take-up speed: 1 m/min,
>>roll temperature: 150°C,
>>discharge rate: 3 kg/hr.

[9] A method for producing a fluororesin composition, characterized by forming the following copolymer (A) by copolymerizing the following monomer (a), the following monomer (b) and the following monomer (c) in a polymerization system where the following copolymer (B) is present:

>Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%,
>Copolymer (B): a copolymer comprising units derived from the following monomer (a), units derived from the following monomer (b) and containing substantially no units derived from following monomer (c), wherein the molar ratio [units derived from monomer (a) to units derived from monomer (b)] of units derived from the monomer (a) to units derived from the monomer (B) is from 20/80 to 80/20,

>>Monomer (a): tetrafluoroethylene,
>>Monomer (b): ethylene,
>>Monomer (c): a monomer having two or more polymerizable carbon-carbon double bonds.

[10] The method for producing a fluororesin composition according to [9], wherein a monomer mixture comprising the monomer (a) and the monomer (b) and containing substantially no monomer (c) is polymerized to form the copolymer (B), and then, polymerization is conducted by supplying a monomer mixture comprising the monomer (a), the monomer (b) and the monomer (c) to the polymerization system where the copolymer (B) is present, to form the copolymer (A).
[11] The method for producing a fluororesin composition according to [9] or [10], wherein in fluororesin composition, the proportion of the copolymer (A) to the total of the copolymer (A) and the copolymer (B) is from 4 to 70 mass%.
[12] A method for producing a fluororesin composition, characterized by melt-kneading the first fluororesin composition obtained by the method for producing a fluororesin composition as defined in any one of [9] to [11] and the copolymer (B), to produce a second fluororesin composition wherein the proportion of the copolymer (A) to the total of the copolymer (A) and the copolymer (B) is from 4 to 30 mass%.
[13] A molded product made of the fluororesin composition as defined in any one of [1] to [8].
[14] A foamed molded product made of the fluororesin composition as defined in any one of [1] to [8].

[15] A covered electric wire having a coating layer made of the fluororesin composition as defined in any one of [1] to [8].

ADVANTAGEOUS EFFECTS OF INVENTION

According to the present invention, it is possible to provide a fluororesin composition excellent in elongation deformability and excellent in mechanical strength of its molded product, and a method for its production, as well as a molded product, a foamed molded product and a covered electric wire, using the fluororesin composition (hereinafter a molded product using the fluororesin composition may be simply referred to as a "molded product").

DESCRIPTION OF EMBODIMENTS

The following definitions of terms apply throughout this specification including claims.
A "monomer" is a compound having a polymerizable carbon-carbon double bond. The term "units derived from a monomer" (referred to also as "monomer units") means structural units composed of monomer molecules, formed by polymerization of a monomer, and a part of monomer molecules may be lost due to decomposition.
A "branched structure" means a structure wherein a molecular chain composed of repeating units is branched at a certain point, and a branch made of a pendant group as a part of the monomer constituting the units shall not be included in the branched structure.

«Copolymers»

In the present invention, the copolymer (A) and the copolymer (B) are copolymers each comprising units derived from the monomer (a) (hereinafter referred to as "units (a)") and units derived from the monomer (b) (hereinafter referred to as "units (b)"), and the two copolymers are different in the presence or absence, or the content, of units derived from the monomer (c) (hereinafter referred to as "units (c)").

<Copolymer (A)>

The copolymer (A) comprises units (a), units (b) and units (c). The copolymer (A) may contain, as the case requires, units derived from the following monomer (d) (hereinafter referred to as "units (d)").

Monomer (a):

Monomer (a) is tetrafluoroethylene (hereinafter referred to also as "TFE").
As the copolymer (A) has units (a), the heat resistance, weathering resistance, chemical resistance, gas barrier properties, fuel barrier properties, etc. of the molded product, will be excellent.

Monomer (b):

Monomer (b) is ethylene (hereinafter referred to also as "E").
As the copolymer (B) has units (b), the melt fluidity of the fluororesin composition, and the mechanical strength of the molded product will be excellent.

Monomer (c):

Monomer (c) is a monomer having two or more polymerizable carbon-carbon double bonds.
A unit (c) will be a branch point of the molecular chain. As the copolymer (A) has units (c), it has a branched structure. As the copolymer (A) has a branched structure, elongation deformability of the fluororesin composition will be excellent.
As the monomer (c), a compound represented by the following formula (c1) is preferred.

$$Y^1\text{-}R^f\text{-}Z^1 \qquad (c1)$$

wherein $R^f$ is a fluoroalkylene group, and $Y^1$ and $Z^1$ are each independently a vinyl group, a trifluorovinyl group or a trifluorovinyloxy group.
$R^f$ is, from such a viewpoint that physical properties of the molded product will be good, preferably a fluoroalkylene group having from 1 to 8 carbon atoms. The fluoroalkylene group is preferably a polyfluoroalkylene group.
$R^f$ is, from such a view point that physical properties of the copolymer (A) will be good, preferably a perfluoroalkylene group, more preferably a perfluoroalkylene group having from 2 to 8 carbon atoms, further preferably a perfluoroalkylene group having from 4 to 8 carbon atoms, and from the viewpoint of the easy availability, particularly preferably a perfluoroalkylene group having 4 or 6 carbon atoms.

$Y^1$ and $Z^1$ are, from such a viewpoint that copolymerizability is good, each preferably a vinyl group or a trifluoromethyl vinyl group. $Y^1$ and $Z^1$ are preferably the same from the viewpoint of easy availability.

As the compound represented by formula (c1), for example, the following ones may be mentioned.

$CH_2=CH-R^{f1}-CH=CH_2$,
$CF_2=CF-R^{f1}-CH=CH_2$,
$CF_2=CF-R^{f1}-CF=CF_2$,
$CF_2=CF-O-R^{f1}-CH=CH_2$,
$CF_2=CF-O-R^{f1}-CF=CF_2$,
$CF_2=CF-O-R^{f1}-O-CF=CF_2$.

Here, $R^{f1}$ is a fluoroalkylene group having from 1 to 8 carbon atoms. Preferred embodiments of $R^{f1}$ are the same as the preferred embodiment of $R^f$.

As the monomer (c), one type may be used alone, or two or more types may be used in combination.

As the monomer (c), from the viewpoint of easy availability, the following ones are preferred.

$CH_2=CH-(CF_2)_{n1}-CH=CH_2$,
$CF_2=CF-O-(CF_2)_{n1}-O-CF=CF_2$.

Here, n1 is an integer of from 4 to 8.

As the monomer (c), the following one (hereinafter referred to as monomer (c1)) is particularly preferred. In monomer (c1), polymerizable carbon-carbon double bonds are vinyl groups, whereby from the polymerizability, units (c1) have a high probability of being adjacent to units (a), and the probability of being adjacent to units (b) is low. Thus, the possibility of hydrocarbon chains being arranged, is low, whereby the copolymer (A) becomes thermally stable.

$CH_2=CH-(CF_2)_{n2}-CH=CH_2$.

Here, n2 is 4 or 6.

Monomer (d):

Monomer (d) is a monomer other than the monomer (a), the monomer (b) and the monomer (c).

The copolymer (A) preferably has units (d).

The monomer (d) is preferably one having one polymerizable carbon-carbon double bond.

The monomer (d) may, for example, be a hydrocarbon type olefin (but excluding E), a fluoroolefin having hydrogen atoms on an unsaturated group, a fluoroolefin having no hydrogen atom on an unsaturated group (but excluding TFE), a perfluoro(alkyl vinyl ether), a vinyl ether, a vinyl ester, an acrylate, a methacrylate, an acid anhydride, etc.

The hydrocarbon type olefin (but excluding E) may, for example, be propylene, butene, etc.

The fluoroolefin having hydrogen atoms on an unsaturated group may, for example, be vinylidene fluoride, vinyl fluoride, trifluoroethylene, a compound represented by the following formula (d1) (hereinafter referred to as monomer (d1)), etc.

$$CH_2=CX^2(CF_2)_{n3}Y^2 \qquad (d1)$$

wherein $X^2$ and $Y^2$ are each a hydrogen atom or a fluorine atom, and n3 is an integer of from 2 to 10.

The fluoroolefin having no hydrogen atom on an unsaturated group (but excluding TFE) may, for example, be chlorotrifluoroethylene, hexafluoropropylene, etc.

The perfluoro(alkyl vinyl ether) may, for example, be perfluoro(propyl vinyl ether), etc.

The vinyl ether may, for example, be an alkyl vinyl ether, a (fluoroalkyl) vinyl ether, glycidyl vinyl ether, hydroxybutyl vinyl ether, methyl vinyloxy butyl carbonate, etc.

The vinyl ester may, for example, be vinyl acetate, vinyl chloroacetate, vinyl butanoate, vinyl pivalate, vinyl benzoate, vinyl crotonate, etc.

The acrylate or methacrylate may, for example, be a (polyfluoroalkyl) acrylate, a (polyfluoroalkyl) methacrylate, etc.

The acid anhydride may, for example, be itaconic anhydride, citraconic anhydride, etc.

As the monomer (d), one type may be used alone, or two or more types may be used in combination.

As the monomer (d), the monomer (d1) is preferred. When the copolymer (A) has units derived from the monomer (d1) (hereinafter referred to as units (d1)), mechanical strength of the molded product will be better. For example, a covered electric wire having a coating layer made of the fluororesin composition, will be excellent in durability, as cracking is less likely to occur in the coating layer.

$X^2$ in the monomer (d1) is, from the viewpoint of easy availability, preferably a hydrogen atom.

$Y^2$ in the monomer (d1) is, from the viewpoint of thermal stability, preferably a fluorine atom.

n3 in the monomer (d1) is, from the viewpoint of the physical properties of the copolymer (A), preferably an integer of from 2 to 6, more preferably an integer of from 2 to 4.

Specific examples of the monomer (d1) include the following ones.

$CH_2=CF(CF_2)_{n3}F$
$CH_2=CF(CF_2)_{n3}H$
$CH_2=CH(CF_2)_{n3}F$
$CH_2=CH(CF_2)_{n3}H$

Here, n3 is an integer of from 2 to 10.

As the monomer (d1), the following ones are preferred.

$CH_2=CF(CF_2)_{n4}F$
$CH_2=CH(CF_2)_{n4}F$
$CH_2=CH(CF_2)_{n4}H$
$CH_2=CF(CF_2)_{n4}H$

Here, n4 is an integer of from 2 to 6.

As the monomer (d1), the following one is more preferred.

$CH_2=CH(CF_2)_{n4}F$

Here, n4 is an integer of from 2 to 6.

As the monomer (d1), the following ones are particularly preferred.

$CH_2=CH(CF_2)_2F$
$CH_2=CH(CF_2)_4F$

The copolymer (A) may be one comprising units (a), units (b) and units (c), or may be one comprising units (a), units (b), units (c) and units (d).

As the copolymer (A), preferred is one comprising units (a), units (b), units (c) and units (d). Among them, particularly preferred is a copolymer containing at least units (d1) as the above units (d).

Composition:

In the copolymer (A), the molar ratio of units (a) to units (b) [units (a)/units (b)] is from 20/80 to 80/20, preferably from 40/60 to 70/30, particularly preferably from 50/50 to 60/40. When units (a)/units (b) is at least the lower limit value in the above range, the molded product will be excellent in characteristics such as heat resistance, weather resistance, chemical resistance, gas barrier properties, fuel barrier properties, etc. When units (a)/units (b) is at most the upper limit value in the above range, the molding composition will be excellent in melt flowability, and the molded product will be excellent in mechanical strength.

The content of units (c) in the copolymer (A) is from 0.2 to 3 mol%, preferably from 0.3 to 2 mol%, more preferably from 0.4 to 1.5 mol%, particularly preferably from 0.4 to 1.0 mol%, to the total (100 mol%) of all units constituting the copolymer (A). When the content of units (c) is at least the lower limit value in the above range, the melt tension of the molding composition becomes sufficiently high, and elongation deformability will be excellent. When the content of units (c) is at most the upper limit value in the above range, the melt flowability of the molding composition, the mechanical strength of the molded product, etc. will be excellent.

In a case where the copolymer (A) contain units (d), the content of units (d) in the copolymer (A) is preferably from 0.01 to 20 mol%, more preferably from 0.05 to 15 mol%, more preferably from 0.1 to 10 mol%, particularly preferably from 0.1 to 7 mol%, to the total (100 mol%) of units (a) and units (b).

In a case where the copolymer (A) contains units (d1), the proportion of the units (d1) is preferably from 0.1 to 7 mol%, more preferably from 0.5 to 5 mol%, further preferably from 0.5 to 3.5 mol%, particularly preferably from 0.7 to 3.5 mol%, to the total of units (a) and units (b).

When the proportion of units (d) is at least the lower limit value in the above range, the mechanical strength of the molded product will be better. For example, when the composition is made into a coating layer of a covered electric wire, the coating layer will be one excellent in durability, which is less susceptible to stress cracking. When the proportion of units (d) is at most the upper limit value in the above range, crystallinity of the copolymer (A) tends to be high, and thus, the melting point of the copolymer (A) tends to be sufficiently high, and the hardness of the molded product will be sufficiently high.

Melt flow rate:

The following melt flow rate (hereinafter referred to also as MFR) of the copolymer (A) is at most 0.5 dg/min and may be 0 dg/min. MFR of the copolymer (A) is preferably from 0 to 0.3 dg/min, more preferably from 0 to 0.1 dg/min, particularly preferably from 0 to 0.05 dg/min. When MFR of the copolymer (A) is at most the above upper limit value, elongation deformability of the molding composition will be excellent.

MFR: the mass of the copolymer (A) flowing out from an orifice having a diameter of 2 mm and a length of 8 mm for 10 minutes, as measured under the conditions of a temperature of 297°C and a load of 49 N, in accordance with ASTM D 3159-10.

Storage modulus G' and loss tangent tan$\delta$:

The copolymer (A) preferably has a storage modulus G' of from $1.0 \times 10^7$ to $1.0 \times 10^{25}$ Pa, and a loss tangent tan$\delta$ of from $1.0 \times 10^{-5}$ to 1.0, more preferably has a storage modulus G' of from $1.0 \times 10^9$ to $1.0 \times 10^{23}$ Pa, and a loss tangent tan$\delta$ of from $1.0 \times 10^{-5}$ to 1.0, and particularly preferably has a storage modulus G' of from $1.0 \times 10^9$ to $1.0 \times 10^{21}$ Pa, and a loss tangent tan$\delta$ of from $1.0 \times 10^{-5}$ to 1.0.

The loss tangent tan$\delta$ is the ratio of the loss modulus G" (Pa) to the storage modulus G' (Pa) (loss modulus G"/storage modulus G').

The storage modulus G' is a physical property value reflecting the elastic modulus, and in the case of the copolymer (A), as the content of units (c) (the amount of a branched structure introduced) is large, the storage modulus G' tends to be high. The loss modulus G" is a physical property value intrinsic to a polymer reflecting the viscosity, and as the molecular weight becomes higher, the viscosity rises, and the loss modulus G" tends to be higher.

When the storage modulus G' is at least the lower limit value in the above range, and the loss tangent tan$\delta$ is at most the upper limit value in the above range, X/W in the fluororesin composition becomes high, and it becomes possible to impart excellent elongation deformability.

When the storage modulus G' is at most the upper limit value in the above range, and the loss tangent tan$\delta$ is at least the lower limit value in the above range, rough surface appearance (melt fracture) during melt molding of the fluororesin composition is less likely to be manifested.

<Copolymer (B)>

Copolymer (B) comprises units (a) and units (b) and contains substantially no units (c). Copolymer (B) may contain units derived from the monomer (d) as the case requires. Containing substantially no units (c) means that if the content of units (c) is large, the solvent solubility decreases, and therefore, units (c) may be contained to such an extent that the copolymer (B) is soluble in the solvent described below. The copolymer (A) contains units (c) to such an extent that the copolymer (A) is not soluble in the solvent described below. The copolymer (B) more preferably contains no units (c).

The monomer (a), the monomer (b), the monomer (c) and the monomer (d) are, respectively, the same as described in the copolymer (A).

The preferred embodiments of the monomer (a), the monomer (b) and the monomer (d) in the copolymer (B) are also the same as in the copolymer (A).

The copolymer (B) may be one comprising units (a) and units (b) or may be one comprising units (a), units (b) and units (d).

As the copolymer (B), a copolymer comprising units (a), units (b) and units (d) is preferred. Among them, a copolymer containing at least units (d1) as units (d), is particularly preferred.

In a case where both of the copolymer (A) and the copolymer (B) have units (d), the units (d) in both copolymers may be the same or different.

With a view to making their melting points to be close to each other in order to improve their kneading properties, it is preferred that units (d) in the copolymer (A) and units (d) in the copolymer (B) are the same. For example, in a case where units (d) in the copolymer (A) are units derived from $CH_2=CH(CF_2)_4F$, units (d) in the copolymer (B) are also preferably units derived from $CH_2=CH(CF_2)_4F$.

Composition:

The preferred ranges of the molar ratio of units (a) to units (b) in the copolymer (B) [units (a)/units (b)], and the content of units (d) in the copolymer (B), are, respectively, the same as the preferred ranges in the copolymer (A).

The contents of units (a), units (b) and units (d) in the copolymer (B) may, respectively, be the same or different as in the copolymer (A).

MFR:

The following MFR of the copolymer (B) is preferably from 1 to 1,000 dg/min, more preferably from 3 to 500 dg/min, particularly preferably from 5 to 300 dg/min. The MFR is an index representing the melt flowability of the copolymer (B) and serves also as an index for the molecular weight. The larger the MFR, the lower the molecular weight, and the smaller the MFR, the higher the molecular weight. When the MFR of the copolymer (B) is at least the lower limit value in the above range, the melt flowability of the composition (I) will be better. When the MFR of the copolymer (B) is at most the upper limit value in the above range, the mechanical strength of the molded product of the composition (I) will be better.

MFR: the mass of the copolymer (B) flowing out from an orifice having a diameter of 2 mm and a length of 8 mm in 10 minutes, as measured under the conditions of a temperature of 297°C and a load of 49 N in accordance with ASTM D 3159-10.

<Production method of copolymers>

The copolymer (A) and the copolymer (B) are, respectively, prepared by polymerizing monomers of the above-described combinations. The polymerization method of monomers is not particularly limited, and, for example, it is possible to employ a method of introducing monomers into a reactor, and copolymerizing them by using a radical polymerization initiator and a chain transfer agent.

Examples of the polymerization method include bulk polymerization; solution polymerization using, as a polymerization medium, an organic solvent such as a fluorinated hydrocarbon, a chlorinated hydrocarbon, a fluorinated chlorinated hydrocarbon, an alcohol, a hydrocarbon, etc.; suspension polymerization using, as a polymerization medium, an aqueous medium and, as the case requires, a suitable organic solvent; emulsion polymerization using, as a polymerization medium, an aqueous medium and an emulsifier; etc.

As the polymerization method, particularly preferred is solution polymerization to copolymerize monomers such as the monomer (a), the monomer (b), etc. in the presence of a radical polymerization initiator, a chain transfer agent and a polymerization medium.

The polymerization can be carried out by using one bath or multi-bath type stirring-type polymerization apparatus, a tubular polymerization apparatus, etc., in a batch or continuous operation.

The radical polymerization initiator may be one which is commonly used.

As the radical polymerization initiator, an initiator of which the temperature at which the half-life is 10 hours, is from 0 to 100°C, is preferred, and an initiator of which such a temperature is from 20 to 90°C, is more preferred. For example, an azo compound such as azobisisobutyronitrile, etc.; a peroxydicarbonate such as diisopropyl peroxydicarbonate, etc.; a peroxy ester such as tert-butyl peroxypivalate, tert-butyl peroxy isobutyrate, tert-butylperoxy acetate, etc.; a non-fluorinated diacyl peroxide such as isobutylyl peroxide, octanoyl peroxide, benzoyl peroxide, lauroyl peroxide, etc.; a fluorinated diacyl peroxide such as $(Z(CF_2)_pCOO)_2$ (wherein Z is a hydrogen atom, a fluorine atom or a chlorine atom, and p is an integer of from 1 to 10), etc.; an inorganic peroxide such as potassium persulfate, sodium persulfate, ammonium persulfate, etc., may be mentioned.

The chain transfer agent may be one which is commonly used, and, for example, an alcohol such as methanol, ethanol, etc.; a chlorofluorohydrocarbon such as 1,3-dichloro-1,1,2,2,3-pentafluoropropane, 1,1-dichloro-1-fluoroethane, etc.; a hydrocarbon such as pentane, hexane, cyclohexane, etc. may be mentioned.

The addition amount of the chain transfer agent is usually from about 0.01 to 100 mass%, to the polymerization medium. By adjusting the addition amount of the chain transfer agent (the concentration of the chain transfer agent), it is possible to adjust the molecular weight of the obtainable copolymer. As the addition amount of the chain transfer agent becomes high within the above range, there is a tendency that a copolymer of a low molecular weight is obtainable.

As the polymerization medium, an organic solvent such as a fluorinated hydrocarbon, a chlorinated hydrocarbon, a fluorinated and chlorinated hydrocarbon, an alcohol or a hydrocarbon, or an aqueous medium, may, for example, be mentioned.

As the polymerization medium for solution polymerization, a hydrofluorocarbon, a chlorofluorocarbon, a hydrochlorofluorocarbon, a hydro-fluoro-ether, a hydrocarbon or an alcohol may, for example, be used.

As the polymerization medium for emulsion polymerization, water is used. To the water, a water-soluble organic medium such as an alcohol may, for example, be added.

As the polymerization medium for suspension polymerization, water is used. To the water, an organic medium such as a hydrofluorocarbon, a chlorofluorocarbon or a hydrochlorofluorocarbon, may, for example, be added.

The hydrofluorocarbon may, for example, be 1,1,2,2-tetrafluorocyclobutane, $CF_3CFHCF_2CF_2CF_3$, $CF_3(CF_2)_4H$, $CF_3CF_2CFHCF_2CF_3$, $CF_3CFHCFHCF_2CF_3$, $CF_2HCFHCF_2CF_2CF_3$, $CF_3(CF_2)_5H$, $CF_3CH(CF_3)CF_2CF_2CF_3$, $CF_3CF(CF_3)CFHCF_2CF_3$, $CF_3CF(CF_3)CFHCFHCF_3$, $CF_3CH(CF_3)CFHCF_2CF_3$, $CF_3CF_2CH_2CH_3$, $CF_3(CF_2)_3CH_2CH_3$, etc. Among them, $CF_3(CF_2)_5H$ (perfluoropentyldifluoromethane) is preferred.

The chlorofluorocarbon may, for example, be 1,1,2-trichlorotrifluoroethane, etc.

The hydrochlorofluorocarbon may, for example, be 1,1,2,2,3-pentafluoro-1,3-dichloropropane, 1-fluoro-1,1-dichloroethane, etc.

The hydrofluoroether may, for example, be $CF_3CH_2OCF_2CF_2H$, $CF_3(CF_3)CFCF_2OCH_3$, $CF_3(CF_2)_3OCH_3$, etc.

The hydrocarbon may, for example, be pentane, hexane, cyclohexane, etc.

The alcohol may, for example, be methanol, ethanol, etc.

The polymerization conditions are not particularly limited, but the polymerization temperature is usually preferably from 0 to 100°C, more preferably from 20 to 90°C. The polymerization pressure is preferably from 0.1 to 10 MPa, more preferably from 0.5 to 3 MPa. By adjusting the polymerization pressure, it is possible to adjust the molecular weight of the obtainable copolymer, and it is also possible to adjust the melt viscosity. As the polymerization pressure becomes high within the above range, the obtainable copolymer tends to have low MFR (high molecular weight) and a high melt viscosity.

In order to obtain a copolymer, it is preferred that as an initial charge, the monomer (a) and the monomer (b) are charged at a molar ratio of monomer (a)/ monomer (b) = 95/5 to 30/70, to a reactor, and along with the progress of the polymerization (because the pressure drops), in order to maintain the pressure to be constant, a mixed gas of the monomer (a) and the monomer (b) with the desired composition is continuously charged.

Charging of the monomer (c) and the monomer (d) is preferably such that the necessary amounts are charged prior to the reaction, and along with the progress of the reaction, additional amounts are continuously charged to attain the desired composition.

«Fluororesin composition»

The fluororesin compositions of the present invention are a fluororesin composition made of a non-melt microblend of the copolymer (A) and the copolymer (B) (referred to also as "first fluororesin composition "; hereinafter referred to as "composition (X)"), and a fluororesin composition comprising the composition (X) and said copolymer (B) (referred to also as "second fluororesin composition; hereinafter referred to as "composition (Y)").

The composition (X) may be used as a resin composition for molding for the production of various molded products by melt molding. Otherwise, the composition (X) may be used as a so-called master batch, so that it is mixed with the copolymer (B) to obtain the composition (Y) as a new resin composition.

<Composition (X) and method for its production>

The composition (X) of the present invention is a non-melt microblend of the copolymer (A) and the copolymer (B), and is made of a non-melt microblend wherein the proportion of the copolymer (B) to the total amount of the copolymer (A) and the copolymer (B) in the non-melt microblend is 4 to 70 mass%.

The non-melt microblend is a mixture in such a state that the copolymer (A) and the copolymer (B) are mixed without passing through a melting process and is meant for a mixture wherein both copolymers are substantially uniformly distributed. Here, "substantially" uniformly means that at least one of them may be present in fine particulate form. Specifically, it may, for example, be collection of fine particles composed of the copolymer (A) and the copolymer (B), a mixture of fine particles of the copolymer (A) and fine particles of the copolymer (B), one having the copolymer (A) dispersed in fine particulate form in a continuous phase of the copolymer (B) (the continuous phase containing fine particles may form a particle form, etc.), etc. The non-melt microblend may also be a homogeneous mixture of the copolymer (A) and the copolymer (B).

The copolymer (A) and the copolymer (B) are each poor in solvent solubility, and particularly, the copolymer (A) is scarcely soluble also in the particular solvent to be described below, whereby it is difficult to obtain a non-melt microblend by using copolymer solutions. Further, it is usually difficult to obtain a uniformly mixed powder by mixing powders made of fine particles of copolymers, from the properties of the powders.

On the other hand, in the above production of the copolymers, it is possible to obtain a dispersion in which fine particles or swollen particles of a copolymer are dispersed in a polymerization medium. Not only in the case of suspension polymerization or emulsion polymerization, but also in the case of solution polymerization, a copolymer to be formed may be precipitated as fine particles in the polymerization medium. A copolymer to be formed in solution polymerization is not less likely to become swollen particles in the polymerization medium. Thus, by mixing a dispersion having fine particles the copolymer (A) dispersed in a polymerization medium and a dispersion having fine particles or swollen particles of the copolymer (B) dispersed in a polymerization medium, and then removing the polymerization medium from the mixed dispersion, it is possible to obtain a uniform or substantially uniform blend of the two copolymers.

Further, it is possible to produce a non-melt microblend by carrying out polymerization of monomers in a polymerization system in which one of the copolymers is present, to form the other copolymer. That is, in a dispersion having fine particles or swollen particles of one of the copolymers dispersed therein, the other copolymer is formed, whereby it is possible to produce a dispersion wherein fine particles or swollen particles in which both copolymers coexist in the polymerization medium, or it is possible to produce a dispersion wherein fine particles or swollen particles of the respective two copolymers coexist in the polymerization medium. By removing the polymerization medium from the dispersion, it is possible to obtain a microblend of fine particulate form, particle form or massive form. In particular, since the solvent solubility of the copolymer (A) is low, it is preferred to produce a non-melt microblend by forming the copolymer (A) by polymerizing monomers in a dispersion having fine particles or swollen particles of the copolymer (B) dispersed in a polymerization medium. This preferred embodiment will be described later.

Here, the fine particles of the copolymer refer to fine particles substantially equal to fine particles of a copolymer to be formed usually in a polymerization medium when the copolymer (A) or the copolymer (B) is produced by solution polymerization, suspension polymerization, emulsion polymerization, etc. by a conventional method, and the average particle size is preferably at most 300 $\mu$m, more preferably at most 100 $\mu$m. Further, the swollen particles are particles in a state where the fine particles are swollen by containing a polymerization medium, and the particle size may be various and is difficult to measure, but if the polymerization medium is removed without aggregating the swollen particles, it is considered possible to obtain fine particles of the same degree as the above-mentioned fine particles.

The content of the copolymer (A) to the total of the copolymer (A) and the copolymer (B) in the composition (X) is from 4 to 70 mass%, preferably from 10 to 60 mass%, more preferably from 20 to 40 mass%. When the content of the copolymer (A) is at least the lower limit value in the above range, at the time of preparing the composition (Y), it becomes possible to determine the content of the copolymer (A) at any optional ratio for blending. When the content of the copolymer (A) is at most the upper limit value in the above range, at the time of preparing the composition (Y), it is possible to finely disperse the copolymer (A), and it becomes possible to achieve both high X/W and excellent mechanical strength.

Here, whether or not the proportion of the copolymer (A) to the total of the copolymer (A) and the copolymer (B), is within the above range, can be confirmed by separating the copolymer (A) and the copolymer (B) by adding a solvent which dissolves the copolymer (B) and does not dissolve the copolymer (A), to the composition (X).

That is, as between the polymer (A) and the copolymer (B), the copolymer (A) containing units (c) has a lower solubility in a solvent. For example, the copolymer (B) is soluble in any solvent such as isophorone, 3',5'-bis(trifluoromethyl) acetophenone, other fluorinated benzonitrile, a fluorinated benzoic acid, a fluorinated benzoic acid ester, a fluorinated nitrobenzene, a fluorinated phenyl alkyl alcohol, a fluorinated phenol, an ester of a fluorinated phenol, a fluorinated aromatic ketone, etc. Whereas, the copolymer (A) is not soluble in such a solvent and will remain as an insoluble content (gel content). Thus, the copolymer (A) and the copolymer (B) can be separated. From the mass of the thus separated copolymer (A) and the mass of the copolymer (B) dissolved in the solvent, it is possible to obtain the proportion of the copolymer (A) to the total of the copolymer (A) and the copolymer (B).

<Preferred method for production of composition (X)>

As mentioned above, the composition (X) is preferably produced by carrying out polymerization of monomers in a polymerization system where one of the copolymer (A) and the copolymer (B) is present, to form the other copolymer. More preferably, it is produced by forming the copolymer (A) by carrying out polymerization of monomers in a polymerization system where the copolymer (B) is present.

As the polymerization system where the copolymer (B) is present, it is preferred to use a dispersion obtained by producing the copolymer (B) by polymerization of monomers, wherein fine particles or swollen particles of the copolymer (B) are dispersed in a polymerization medium. To such a dispersion of the copolymer (B), monomers to form the copolymer (A) and, as the case requires, a polymerization initiator, etc. are added to carry out polymerization to form the copolymer (A), and from the obtained dispersion containing fine particles or swollen particles (such particles may individually be particles made of both the copolymer (A) and the copolymer (B), or particles made of one of the copolymers), the polymerization medium is removed to obtain a composition (X) of e.g. fine particulate form, particle form or massive form.

More specifically, for example, firstly in accordance with the above-mentioned method for producing the copolymer (B), a dispersion of the copolymer (B) is produced. The polymerization method is preferably solution polymerization. By solution polymerization, a dispersion having swollen particles of the copolymer (B) dispersed in a polymerization medium, is obtainable. To this dispersion, as the case requires, a radical polymerization initiator or chain transfer agent is added, and monomers to produce the copolymer (A) are introduced and subjected to polymerization, to form the copolymer (A).

The polymerization to form the copolymer (B) and the polymerization to form the copolymer (A), may be carried out separately or may be carried out continuously. As the polymerization process can be simplified, it is preferred to carry out the polymerizations continuously. For example, firstly a dispersion of the copolymer (B) is prepared by solution polymerization, and in the polymerization apparatus where the obtained dispersion is present, subsequently, to the obtained dispersion, monomers to form the copolymer (A) are introduced and subjected to polymerization to form the copolymer (A). In the case of carrying out polymerization continuously, the amount of a radical polymerization initiator or a chain transfer agent used to prepare the copolymer (B) may be adjusted to be an amount having the amount required to produce the copolymer (A) added, whereby it is possible to form the copolymer (A) without newly adding a radical polymerization initiator or a chain transfer agent.

«Molding composition»

The composition (X) may be used as a molding composition for the production of a molded product. Further, various additives may be blended to the composition (X), and such a blend may be used as a molding composition for the production of a molded product.

In a case where a molded product is prepared from the molding composition comprising the composition (X), molding is usually carried out by melt-kneading the molding composition. In the case of using only the composition (X) for the molding, melt-molding may be carried out without kneading. However, it is preferred to carry out melt-kneading even in the case of using only the composition (X).

An additive may be a heat-meltable resin. The heat-meltable resin may be a copolymer (B). The compositions (X) and the copolymer (B) may be, optionally together with other additives, melt-kneaded and molded to produce a molded product. Otherwise, the composition (X) and the copolymer (B) may be melt-kneaded to obtain a molding material in the form of pellets, etc., and the molding material may be used as a molding composition to produce a molded product.

The above-mentioned composition (Y) is a composition to be used as a molding material, which is produced by melt-kneading the composition (X) and the copolymer (B).

The composition (Y) contains the copolymer (B) in the composition (X) and the copolymer (B) blended by melt-kneading. In the case of distinguishing the two, the copolymer (B) in the composition (X) will be referred to as "copolymer (B1)", and the copolymer (B) blended by melt kneading will be referred to as "copolymer (B2)".

The copolymer (B1) and the copolymer (B2) are, respectively, copolymers belonging to the category of the copolymer (B), but the two may be different. For example, they may be different in the types or compositions of the monomer units, or maybe different in the physical properties such as MFR, etc. However, in order that the physical properties such as melt fluidity, elongation deformability, etc. of the composition (Y) and the physical properties such as mechanical strength, etc. of the molded product, would be good, the copolymer (B1) and the copolymer (B2) should preferably have substantially the same physical properties, and for that purpose, the types and compositions of the monomer units should preferably be substantially the same.

The proportion of the copolymer (A) to the total of the copolymer (A) and the copolymer (B) in the composition (Y), is from 4 to 30 mass%, preferably from 5 to 25 mass%, more preferably from 6 to 20 mass%. When the proportion of the copolymer (A) is at least the lower limit value in the above range, elongation deformability of the composition (Y) will be excellent. When the proportion of the copolymer (A) is at most the upper limit value in the above range, the composition (Y) will be good in melt fluidity and mechanical physical properties, and will have excellent elongation deformability.

When the composition (X) is used as a raw material of the composition (Y), its content of the copolymer (A) may be higher than when used as a molding composition. However, in the case of using the composition (X) as a molding composition, the composition (X) wherein the proportion of the copolymer (A) to the total of the copolymer (A) and the copolymer (B) is from 4 to 30 mass%, is used. The proportion of the copolymer (A) in the composition (X) to be used as a molding composition, is more preferably from 5 to 25 mass%, particularly preferably from 6 to 20 mass%.

Further, a composition other than the composition (Y) containing the composition (X), the composition (Y), and a composition containing the composition (Y), to be used as molding compositions, will be hereinafter all together referred to as "composition (Z)". The physical properties of the composition (Z) preferably satisfy at least one of, or more preferably satisfy at least two of, the following fish eye number, X/W and MIT flex number.

<Fish eyes>

In the composition (Z), the number of the following fish eyes is preferably less than $200/m^2$, more preferably less than $100/m^2$, particularly preferably less than $50/m^2$.

The fish eyes are resin lumps in a shape of fish eyes, which are an index showing a dispersion state of the copolymer (A) in the composition (Z). The smaller the number of fish eyes, the more finely and uniformly the copolymer (A) is dispersed in the composition (Z).

When the fish eyes are at most the above upper limit value, the copolymer (A) is sufficiently finely and uniformly dispersed in the composition (I), whereby a molded product of the composition (Z) will be excellent in mechanical strength.

Fish eyes: using a single screw extruder (manufactured by Tanabe Plastics Machinery Co., Ltd.), the composition (Z) is extrusion-molded under the following film forming conditions to prepare a film having a thickness of 200 μm, whereupon the number of fish eyes with a size of at least $0.05 mm^2$ present in a region with an area of $0.25 m^2$ randomly selected from the surface of said film, is visually measured, and the measured number is quadrupled to calculate the number (number/$m^2$) of fish eyes per 1 $m^2$.

(Film forming conditions)

Temperature: C1/C2/C3/die = 300°C/300°C/300°C/300°C, L/D: 25,
cylinder diameter: 30 mm,
screw: full flight,
compression ratio: 3.2,
screw rotation speed: 14 rpm,
die width: 150 mm,
air gap: 23 mm,
take-up speed: 1 m/min,
roll temperature: 150°C,
discharge rate: 3 kg/hr.

Here, the film forming shall be carried out under the above described extrusion conditions without using a member (such as a sintered filter, etc.) to reduce fish eyes or without conducting an operation to remove components which will be fish eyes, in the above mentioned film forming process.

In the present invention, the composition (Z) is produced by melt-mixing the composition (X) and the copolymer (B), whereby the copolymer (A) and the copolymer (B) are more uniformly mixed and the number of fish eyes is reduced, as compared with the case of simply melt-mixing the copolymer (A) and the copolymer (B).

<X/W>

The ratio (X/W) of the melt tension X (N) of the composition (Z) to the load W (N) at the time of measuring the melt tension X, is preferably from $4.0 \times 10^{-5}$ to $2.5 \times 10^{-4}$ [N/N], more preferably from $4.5 \times 10^{-5}$ to $2.0 \times 10^{-4}$ [N/N], particularly preferably from $5.0 \times 10^{-5}$ to $1.7 \times 10^{-4}$ [N/N].

When X/W is at least the lower limit value in the above range, elongation deformability of the composition (Z) will be better, and when it is at most the upper limit value, melt moldability of the composition (I), and mechanical strength, etc. of a molded product of the composition (Z) will be better.

X/W may be adjusted by the content of units (c) in the copolymer (A), the proportion of the copolymer (A) to the total of the copolymer (A) and the copolymer (B), etc. For example, as long as the content of units (c) in the copolymer (A) is within the above-mentioned range, X/W tends to increase, as the content of units (c) becomes large. Further, X/W tends to increase, as the proportion of the copolymer (A) to the total of the copolymer (A) and the copolymer (B) becomes large.

<MIT flex number>

Of the composition (Z), the following MIT flex number is preferably from 5,000 to 300,000 times, particularly preferably from 10,000 to 300,000 times. When the MIT flex number is at least the lower limit value in the above range, a molded product of the composition (Z) will be excellent in mechanical strength (particularly in bending resistance).

MIT flex number: A strip-form measurement sample having a width of 12.5 mm and a thickness of from 0.220 to 0.236 mm made of the composition (Z), was prepared, and in accordance with ASTM D-2176 using a bending tester MIT-D (manufactured by Toyo Seiki Co., Ltd.), a bending test of the measurement sample was carried out under conditions of a load of 12.25 N (1.25 kg), a bending angle of $\pm 135$ degrees at room temperature, whereby the number of bending times until the measurement sample was broken, was adopted as the MIT flex number.

The MIT flex number of the composition (Z) may be adjusted by e.g. the content of units (c) in the copolymer (A), the molecular weight of the copolymer (A), the molecular weight of the copolymer (B), the content of the copolymer (A) in the composition (Z), the content of units (d) contained in the copolymers (A) and (B), etc.

The composition (Z) may contain a compounding agent in a range not to impair the effects of the present invention. In the case of the composition (X), a compounding agent (but other than the copolymer (B)) may be blended to the composition (X) to obtain a composition (Z). In the case of the composition (Y), a compounding agent may be blended at the time of producing the composition (Y) by melt-kneading the composition (X) with the copolymer (B), to obtain a composition (Z) containing the compounding agent. Otherwise, by blending a compounding agent (but other than the copolymer (B)) to the composition (Y), it is possible to obtain a composition (Z). The compounding agent is preferably mixed and uniformly blended, while melt-kneaded with the composition (X), with the composition (X) and the copolymer (B), or with the composition (Y). The shape of the molding composition may be particulate such as powder or pellets.

The compounding agent may, for example, be a resin having melt-moldability other than the copolymer (A) and the copolymer (B), an additive, etc..

The resin having melt-moldability may, for example, be an ETFE copolymer other than the copolymer (A) and the copolymer (B), a thermoplastic fluororesin other than an ETFE copolymer, a polyamide resin having an amino group at its terminal groups (PA11, PA12, PA612, PA6, PA66, PA6T, PA9T, etc.) and its elastomer, a polyester resin having a hydroxy group (PET, PBT, etc.), a polyvinyl alcohol-type resin having a hydroxy group, an ethylene-glycidyl methacrylate copolymer having an epoxy group, etc.

The additive may, for example, be a pigment, an ultraviolet absorber, a filler, a crosslinking agent, an antioxidant, an antistatic agent, a flame retardant, a nucleating agent, a foaming agent, an oil, a dye, etc.

Melt-kneading for preparing the composition (Z) may be carried out by a known method. For example, a method of melt-kneading by a known kneader, the composition (X) and the copolymer (B), and, as the case requires, a compounding agent, in the desired amounts.

As the kneader, an internal mixer, a uniaxial kneader, a biaxial kneader, a single screw extruder, a twin screw extruder, a multi-screw extruder, etc. may be mentioned. Among them, an extrusion molding machine such as a twin screw extruder or a multi-screw extruder is preferred.

The melt-kneading temperature may be a temperature at which all resin components (the copolymer (A) and the copolymer (B), as well as melt moldable other resins when such other resins are blended) will melt, and it may suitably be set depending upon the types of the resin components to be kneaded. The melt-kneading temperature is typically from 260 to 360°C, preferably from 270 to 340°C.

The composition (X) or the composition (Y) may be used for the production of a molded product without once being formed into a composition (Z). For example, the composition (X) not melt-kneaded, may be, if necessary together with a compounding agent, molded by a molding apparatus having a melt-kneading means, whereby it is possible to produce a molded product made of a melt-kneaded composition (X). Further, it is possible to produce a molded product by molding the composition (X) not melt-kneaded and the copolymer (B), if necessary together with a compounding agent, by a molding apparatus having a melt kneading means. In this case, the composition (X) and the copolymer (B) will be melt-kneaded in the molding device, so that a molded product made of the composition (Y) will be consequently produced.

In each of the above cases, if the entire mixture before melt-kneading in the molding apparatus is viewed as a composition, it may be deemed to be a composition (Z).

Further, the composition of the composition (Z) and the composition of a molded product of the composition (Z) are usually the same. However, if there is a component which disappears in the course of molding, the two may be different. For example, in the case of using a blowing agent to be gasified or decomposed to generate gas at the time of the melt-kneading, the composition of the material constituting a foamed molded product (excluding a gas in the foams) and the composition of the composition (Z) are usually different. Conversely, in the case of producing a foamed molded product by mixing a gas into a melt during melt molding, the composition of the material constituting the foamed molded product (excluding a gas in the foams) and the composition of the composition (Z) are the same.

Thus, there may be a case where the composition of the composition (Z) and the composition of its molded product are different, but except for the presence or absence of an additive to disappear such as a blowing agent, both compositions are usually identical. In particular, the relative proportions of the copolymer (A) and the copolymer (B) will not change.

The total content of the copolymer (A) and the copolymer (B) in the above composition (Z) and in the composition of its molded product, is preferably at least 80 mass%, more preferably at least 90 mass%, particularly preferably at least 95 mass%, to the total amount of the composition. When the total content of the copolymer (A) and the copolymer (B) is at least the above lower limit value, it is possible to develop, without impairing the properties of the resin made of the copolymer (A) and the copolymer (B), the properties of other resins and additives.

The upper limit of the total content of the copolymer (A) and the copolymer (B) is not particularly limited and may be 100 mass%.

<Advantageous effects>

The molding composition of the present invention as described above comprises the copolymer (A) and the copolymer (B), wherein the proportion of the copolymer (A) to the total of the copolymer (A) and the copolymer (B) is from 4 to 30 mass%, and the number of fish eyes to be measured in a predetermined procedure is less than $200/m^2$, whereby both the elongation deformability and mechanical strength (bending resistance, etc.) can be made to be excellent.

As the molding composition is excellent in elongation deformability, by using it in various molding accompanying an elongation deformation, it is possible to obtain a good molded product.

For example, a portion stretched at the time of melt-blowing the molding composition is not elongated too much since the viscosity is increased, and a portion not stretched, will be stretched as the viscosity is low. As a result, in melt-blow molding, it is easy to form good foams. That is, it is possible to obtain a foamed molded product, wherein foams are small, the size of foams is less likely to become non-uniform, the specific gravity of the foamed molded product is low, the porosity is high, the number density of foams is high, and the expansion ratio is high.

Further, in blow molding, inflation molding or film molding (T-die cast molding), the thickness of the molded product tends to be uniform. In melt spinning, the diameter of the fiber tends to be uniform. In film molding (T-die cast molding), neck-in or deformation (waviness, rough skin, etc.) is less likely to occur.

«Molded products»

The shapes, etc. of molded products are not particularly limited. Specific examples include electric wire covering materials, foamed molded products, films, sheets, belts, tubes, hoses, tanks, bottles, release films, light construction materials such as floating materials, cushioning material such as cushions, electrically insulating materials, heat insulation materials, sound insulation materials, etc. Among them, an electric wire covering material or a foamed molded product is preferred. More specific applications include, but not limited to the following, an antenna wire for high frequency equipment, for medical, for broadband or for mobile communication member, a coaxial cable for cable television, a wire harness member for automotive, for aircraft or for factory automation, etc. Further, an industrial wire harness member for connection between production equipment such as a robot device for semiconductor and liquid crystal panel manufacturing equipment, and also a wire harness member for connection between internal wirings of multimedia-related industrial equipment unit and equipment, may be mentioned. Here, when to be used as an electric wire covering material, a molded product of the present invention is formed so as to cover the core wire. By using a foamed molded product as an electric wire covering material, a foamed electric wire covering material may be formed.

The composition (Z) can be molded by a conventional molding method such as injection molding, extrusion molding, blow molding, press molding, rotational molding or electrostatic coating. The shape of an obtained molded product may be sheet-form, fiber-form, film-form, tube-form or the like, and is not particularly limited. Further, fibers may be monofilaments or multifilaments, and their shape is not particularly limited. Further, an obtained molded product may be stretched to form a porous body. Otherwise, on an obtained molded product, coating may be formed, or a laminated layer structure may be formed by another resin, etc.

Fibers obtained from the molded product may be formed into a cloth such as a woven fabric, a non-woven fabric, a felt, a knitted fabric, etc. The obtained cloth may be used, not only as it is as clothing, but also as a base material for e.g. a composite laminate for protective apparel, or for an electrolytic membrane. When to be used as a base material, it is preferably a porous material.

Specific applications of the molded product may, for example, be, in the case of garments, etc., a thermostable convective barrier of a flexible fabric composite to be used for e.g. a fire-resistant protective clothing as described in JP-A-2012-525288, a porous support layer of a durable chemical protective material to be used in a chemical protection suit as described in JP-A-2012-519535, a laminate on an outer film surface of a single wall lightweight tent structure as described in JP-A-2012-526937, etc.

Further, the base material for a film, etc. may, for example, be a porous support for a membrane of a membrane electrode assembly to be used for a fuel cell or electrolytic cell as described in JP-A-2014-005471, a non-conductive base material for antistatic coating to be used for clothes or a cable containing such a non-conductive layer, etc. as described in JP-A-2014-513734, or a stretched fluoropolymer having a hydrophilic coating formed, to be used in a medical device such as an electronic wire or cable as described in JP-A-2014-525847. Further, fibers obtained from the molded product may be used for applications as described in paragraphs [0017], [0018], etc. of JP-A-2012-512770.

A molded product of the present invention is obtainable by melt-molding the composition (Z), etc.

The melt molding method may be a known melt-molding method such as injection molding, extrusion molding, blow molding, inflation molding, press molding, transfer molding, calendar molding, etc. The melt molding method may be a melt-blow molding method.

In the molded product of the present invention as described above, the mechanical strength (bending resistance, etc.) is good. Further, the productivity is good.

«Foamed molded product»

The foamed molded product of the present invention is a foamed molded product made of the above molded composition.

The shape, etc. of the foamed molded product are not particularly limited. Specific examples may be those mentioned in the above-described molded products. Among them, one formed as a foamed electric wire covering material by using a foamed molded product as an electric wire covering material, is preferred.

The foamed molded product of the present invention is obtainable by melt-blow molding the above composition (Z), etc.

The melt-blow molding method may be a known melt-blow molding method.

In the foamed molded product of the present invention as described above, the mechanical strength (bending resistance, etc.) is good. Further, foams which are formed are good. Further, the productivity is good.

«Covered electric wire»

The covered electric wire of the present invention is one having a coating layer made of the above-described molded composition.

The covered electric wire may, for example, be one having a core wire and a coating layer made of the above-described molded composition, to cover the surface.

The material for the core wire may, for example, be copper, a copper alloy, aluminum, an aluminum alloy, etc., and copper is preferred. The core wire may be plated with tin, silver or the like.

The cross-sectional diameter of the core wire is preferably from 10 $\mu$m to 3 mm.

The thickness of the coating layer is preferably from 5 $\mu$m to 2 mm.

The cross-sectional diameter of the covered electric wire is preferably from 20 $\mu$m to 5 mm.

The electric wire may be produced by a known method such as a melt-extrusion molding method or a melt blow extrusion molding method. For example, the above-described composition (Z) or the like, is melted and extruded around a core wire to form a coating layer covering the surface of said core wire, thereby to obtain a covered electric wire.

In the covered electric wire of the present invention as described above, the coating layer is excellent in thermal stress cracking resistance, and mechanical strength (resistance to bending, etc.) of the coating layer is good. Further, the productivity is good.

Further, in a case where the coating layer is one formed by a melt-blow molding method, i.e. in the case of a foamed electric wire covering material, foams formed in the coating layer are good. The covered electric wire (foamed covered electric wire) wherein the coating layer is a foamed electric wire covering material, is preferably used, for example, as a wire harness member for automotive, for aircraft or for factory automation.

EXAMPLES

Now, the present invention will be described in detail with reference to Examples. However, the present invention is not limited by the following description.

The evaluation methods used in Examples are shown below.

[Evaluation methods]

<Composition of copolymer>

The molar ratios of the respective units in a copolymer were obtained from the melt NMR measurements and the total fluorine content measurements. However, in the case of measuring the content of a copolymer containing units (c), by using, in addition to the above measurements, a pyrolysis gas chromatography, the composition of the copolymer (the contents of respective units) was determined.

<Melting point>

By using SII DSC6220 type differential scanning calorimeter apparatus (manufactured by Seiko Instruments Inc.), the melting peak (°C) at the time of raising the temperature at a rate of 10°C/min, was measured, and the measured value was adopted as the melting point.

<MFR>

In accordance with ASTM D 3159-10, the mass of the resin component flowing out in 10 minutes from an orifice having a diameter of 2 mm and a length of 8 mm under conditions of a temperature of 297°C and a load of 49 N (5 kg), was measured.

<Evaluation of content of insoluble component>

The composition obtained in each Example (compositions 1 to 6 each obtained by melt-kneading only the resin component) was added to isophorone so that the concentration of the composition would be 0.1 mass% and was dissolved by heating to 200°C. The obtained solution was filtered through a filter to recover an insoluble component in the solution. The insoluble component was dried at 180°C for 15 hours, and the mass of the insoluble component after drying was measured. From the measured value and the mass of the composition added to isophorone, the insoluble component content (mass%) in the composition was determined.

<MFR of copolymer (A)>

MFR of the insoluble component obtained by the method described in the above evaluation of content of insoluble component, was measured. The measured value was adopted as MFR of the copolymer (A).

<Viscoelasticity of copolymer (A)>

The insoluble component obtained by the method described in the above-described evaluation of content of insoluble component (copolymer A), was formed into a pressed film having a thickness of 1 mm at a temperature of the melting point of copolymer (A) + 55°C under a pressure of 10 MPa. The obtained pressed film was punched into a disk shape having a diameter of 25 mm and used as an evaluation sample.

With respect to the evaluation sample, by means of a rotary rheometer (RHEOMETER CSM (manufactured BOHLIN)), the storage modulus G' at the melting point + 65°C, the loss modulus G" and the loss tangent tan δ of copolymer (A) were measured. Using a parallel disk of 25 mm in diameter as the fixture for the evaluation sample, the fixed gap was set to be 1.0 mm. The viscoelasticity was measured at a temperature of the melting point of the measured resin + 65°C at a frequency 0.11 Hz.

<X/W>

Measurement of the melt tension X was carried out in the following procedure by means of a capillograph (manufactured by Toyo Seiki Seisaku-Sho, Ltd.), using a cone-equipped die having a diameter of 1 mm and a length of 10 mm at an inlet angle of 90 degrees.

A nucleating agent-blended composition obtained in each Example (one having a nucleating agent added to a composition composed solely of a resin component) was press-molded at 300°C to prepare a sheet having a thickness of 1 mm. The sheet was finely cut into squares of 5 mm, and 10 g of the finely cut sample was put into a barrel set at the melting point of the nucleating agent-blended composition + 50°C. Then, a piston was inserted from the top and left to stand for 5 minutes until the nucleating agent-blended composition was melted and the barrel temperature was stabilized at the melting point + 50°C. Then, the piston was lowered at a speed of 5 mm/min and waited until the load applied to the piston became constant; and after the load became constant, the withdrawal speed by a take-up device was set to be 3 m/min and a strand of the nucleating agent-blended composition flowing out from the die, was slowly led to the take-up device so as not to be broken, and the strand was withdrawn. The withdrawal strength applied at that time was measured for one minute. With respect to the measured withdrawal strength, an average value in the measurement period was calculated, and the obtained value was adopted as the melt tension X (mN).

From the above melt tension X and the load W (N) at the time when the load applied to the piston became constant during the measurement, the value of X/W [N/N] was calculated.

<Evaluation of foaming state>

By using the following foaming test apparatus, under either one of the following blow molding conditions (extrusion conditions) 1 to 6, a covered electric wire was prepared by carrying out foamed electric wire molding of the nucleating agent-blended composition obtained in each Example. That is, the nucleating agent-blended composition was melt-foamed and extruded around a core wire (core wire diameter: 0.5 mm, material: copper) to form a coating layer to cover the surface of the core wire.

The cut surface of the obtained coating layer (foamed molded product) was visually observed, whereby the foaming state was evaluated by the shape of foams and the uniformity in the distribution state of foams.

(Foaming test apparatus)

Cylinder diameter of extruder: 50 mm,
L/D of extruder: 33,
Die width of extruder: 3.0 mm,
Tip of extruder: 1.5 mm,

Land of extruder: 7.0 mm.

(Blow molding condition 1)

Temperatures: C1/C2/C3/C4/C5/adapter/head/die = 310°C/320°C/320°C/310°C/310°C/300°C/280°C/280°C,
Screw rotation speed: 13 rpm,
Type of blowing agent: carbon dioxide
Blowing agent flow rate: 18 mL/min,
Resin pressure: 15 MPa,
Resin temperature: 310°C,
Cone length: 20 mm.

(Blow molding condition 2)

Temperatures: C1/C2/C3/C4/C5/adapter/head/die = 310°C/320°C/320°C/310°C/310°C/300°C/280°C/280°C,
Screw rotation speed: 30 rpm,
Type of blowing agent: carbon dioxide
Blowing agent flow rate: 18 mL/min,
Resin pressure: 15 MPa,
Resin temperature: 310°C,
Cone length: 20 mm.

(Blow molding condition 3)

Temperatures: C1/C2/C3/C4/C5/adapter/head/die = 310°C/320°C/320°C/310°C/310°C/300°C/280°C/280°C,
Screw rotation speed: 13 rpm,
Type of blowing agent: carbon dioxide
Blowing agent flow rate: 27 mL/min,
Resin pressure: 15 MPa,
Resin temperature: 310°C,
Cone length: 20 mm.

(Blow molding condition 4)

Temperatures: C1/C2/C3/C4/C5/adapter/head/die = 310°C/320°C/320°C/310°C/310°C/300°C/280°C/280°C,
Screw rotation speed: 13 rpm,
Type of blowing agent: carbon dioxide
Blowing agent flow rate: 18 mL/min,
Resin pressure: 7 MPa,
Resin temperature: 310°C,
Cone length: 20 mm.

(Blow molding condition 5)

Temperatures: C1/C2/C3/C4/C5/adapter/head/die = 310°C/320°C/320°C/310°C/310°C/300°C/270°C/270°C,
Screw rotation speed: 13 rpm,
Type of blowing agent: carbon dioxide
Blowing agent flow rate: 18 mL/min,

Resin pressure: 15 MPa,
Resin temperature: 310°C,
Cone length: 20 mm.

(Blow molding condition 6)

Temperatures: C1/C2/C3/C4/C5/adapter/head/die = 310°C/320°C/320°C/310°C/310°C/300°C/300°C/300°C,
Screw rotation speed: 13 rpm,
Type of blowing agent: carbon dioxide
Blowing agent flow rate: 18 mL/min,
Resin pressure: 15 MPa,
Resin temperature: 310°C,
Cone length: 20 mm.

<Evaluation of fish eyes>

The nucleating agent-blended composition obtained in each Example, was extrusion-molded by means of a single screw extruder (manufactured by Tanabe Plastics Machinery Co., Ltd.) under the following film forming conditions, to prepare a film having a thickness of 200 $\mu$m. From the surface of the film, a region with an area of 0.25 m$^2$ was randomly selected, and the number of fish eyes with a size of at least 0.05 mm$^2$ present in the region, was visually measured. The measured number was quadrupled to calculate the number of fish eyes per 1 m$^2$ (number/m$^2$).
Fish eyes which are measured as described above, are considered to be attributable to an insoluble component. If irregularities due to fish eyes (lumps of a resin) with a size of at least 0.05 mm$^2$ are formed on the film surface, not only the appearance is impaired, but also a deterioration in the mechanical strength is worried.

(Film forming conditions)

Temperatures: C1/C2/C3/die = 300°C/300°C/300°C/300°C, L/D: 25,
Cylinder diameter: 30 mm,
Screw: full flight,
Compression ratio: 3.2,
Screw rotation speed: 14 rpm,
Die width: 150 mm,
Air gap: 23 mm,
Take-up speed: 1 m/min,
Roll temperature: 150°C,
Discharge rate: 3 kg/hr.

<MIT flex number>

A strip-shaped measurement sample having a width of 12.5 mm and a thickness of from 0.220 to 0.236 mm made of the second composition obtained in each Example was prepared, and in accordance with ASTM D-2176 by means of a bending tester MIT-D (manufactured by Toyo Seiki Co., Ltd.), a bending test of the measurement sample was carried out under conditions of a load of 12.25 N (1.25 kg), a bending angle of $\pm135°$ and room temperature. The number (times) of bending times until the measurement sample was broken, was adopted as the MIT flex number.

[Production Example 1: Production of composition (X-1)]

Into a 21 L pressure container equipped with a stirrer, after deaeration, 19.3 kg of $CF_3(CF_2)_5H$ (hereinafter referred to as C6H), 0.20 kg of methanol, 0.083 kg of $CH_2=CH(CF_2)_4F$ (hereinafter referred to as PFBE), 2.3 kg of tetrafluoroethylene (hereinafter referred to as TFE) and 0.13 kg of ethylene (hereinafter referred to as E) were charged at room temperature. Then, the temperature was raised to 66°C, and 80 mL of a 2 mass% solution (solvent: C6H) of t-butyl peroxypivalate (10-hour half-life temperature: 55°C) was charged to initiate polymerization. As the pressure decreases along with the progress of polymerization, a mixed gas of TFE and E (TFE/E = 54/46 molar ratio) was continuously charged so that the pressure would be constant. Further, PFBE was continuously charged at a proportion of 1.5 mol% to the mixed gas (when the total molar amount of TFE and E was taken as 100 mol%). At the time when the charged amount of the mixed gas became 1 kg after initiation of the polymerization, 0.0195 kg of $CH_2=CH(CF_2)_6-CH=CH_2$ (hereinafter referred to as "diene") was added and, thereafter, the diene was continuously charged at a ratio corresponding to 0.6 mol% to the mixed gas. At the time when the amount of the mixed gas charged became 1.5 kg, the internal temperature was cooled to room temperature, an unreacted gas was released, and the pressure container was opened. The content in the pressure container was washed with C6H, filtered through a glass filter and dried to obtain a 1.5 kg of composition (X-1).

In the composition (X-1) (containing the copolymer (A) and the copolymer (B)), the molar ratio of TFE units/E units/PFBE units/diene units was 54.0/46.0/1.53/0.20. The melting point was 257°C, and MFR was 5 dg/min.

Further, when the obtained composition (X-1) was infiltrated in a soluble solvent, it was separated into a soluble component and an insoluble component. The insoluble component was recovered by filter-filtration and dried. The insoluble component was subjected to a composition analysis by pyrolysis gas chromatography, whereby the molar ratio of TFE units/E units/PFBE units/diene units in the insoluble component (copolymer (A)) was 54.0/46.0/1.53/0.60. Further, MFR of the insoluble component was 0 dg / min.

[Production Example 2: Production of copolymer (B-1)]

Into a 21 L pressure container equipped with a stirrer, after deaeration, 19.3 kg of C6H, 0.195 kg of methanol, 0.083 kg of PFBE, 2.3 kg of TFE and 0.13 kg of E were charged at room temperature. Then, the temperature was raised to 66°C, and 80 mL of a 2 mass% solution (solvent: C6H) of t-butyl peroxypivalate (10-hour half-life temperature: 55°C) was charged to initiate polymerization. As the pressure decreases along with the progress of polymerization, a mixed gas of TFE and E (TFE/E = 54/46 molar ratio) was continuously charged so that the pressure would be constant. Further, PFBE was continuously charged at a proportion of 1.5 mol% to the mixed gas (when the total molar amount of TFE and E was taken as 100 mol%). At the time when the amount of the mixed gas charged became 1.5 kg, the internal temperature was cooled to room temperature, an unreacted gas was released, and the pressure container was opened. The content in the pressure container was washed with C6H, filtered through a glass filter and dried to obtain 1.5 kg of copolymer (B-1).

In the copolymer (B-1), the molar ratio of TFE units/E units/PFBE units was 54.0/46.0/1.50. The melting point was 155°C, and MFR was 34 dg/min.

[Production Example 3: Production of copolymer (A-a)]

Into a 21 L pressure container equipped with a stirrer of 21 L, after deaeration, 19.3 kg of C6H, 0.20 kg of methanol, 0.083 kg of PFBE, 0.0020 kg of diene, 2.3 kg of TFE and 0.13 kg of E were charged at room temperature. Then, the temperature was raised to 66°C, and 80 mL of a 2 mass% solution (solvent: C6H) of t-butyl peroxypivalate (10-hour half-life temperature: 55°C) was charged, to initiate polymerization. As the pressure decreases along with the progress of polymerization, a mixed gas of TFE and E (TFE/E = 54/46 molar ratio) was continuously charged so that the pressure would be constant. PFBE was continuously charged at a proportion of 1.5 mol% to the mixed gas. The diene was continuously charged at a ratio corresponding to 0.1 mol% to the mixed gas. At the time when the amount of the mixed gas charged became 1.5 kg, the internal temperature was cooled to room temperature, an unreacted gas was released, and the pressure container was opened. The content in the pressure container was washed with C6H, filtered through a glass filter and dried to obtain 1.5 kg of copolymer (A-a).

In the copolymer (A-a), the molar ratio of TFE units/E units/PFBE units/diene units was 54.0/46.0/1.53/0.06. The melting point was 256°C, and MFR was 0 dg/min.

[Production Example 4: Production of copolymer (A-b)]

Into a 21 L pressure container equipped with a stirrer, after deaeration, 19.3 kg of C6H, 0.20 kg of methanol, 0.083 kg of PFBE, 0.0016 kg of diene, 2.3 kg of TFE and 0.13 kg of E were charged at room temperature. Then, the temperature was raised to 66°C, and 80 mL of a 2 mass% solution (solvent: C6H) of t-butyl peroxypivalate (10-hour half-life temperature: 55°C) was charged to initiate polymerization. As the pressure decreases along with the progress of polymerization, a mixed gas of TFE and E (TFE/E = 54/46 molar ratio) was continuously charged so that the pressure would be constant. PFBE was continuously charged at a proportion of 1.5 mol% to the mixed gas. The diene was continuously charged at a ratio corresponding to 0.07 mol% to the mixed gas. At the time when the amount of the mixed gas charged became 1.5 kg, the internal temperature was cooled to room temperature, an unreacted gas was released, and the pressure container was opened. The content in the pressure container was washed with C6H, filtered through a glass filter and dried to obtain 1.5 kg of copolymer (A-b).

In the copolymer (A-b), the molar ratio of TFE units/E units/PFBE units/diene units was 54.0/46.0/1.53/0.05.

The melting point was 257°C, and MFR was 2 dg/min.

[Production Example 5: Production of copolymer (A-c)]

Into a 21 L pressure container equipped with a stirrer, after deaeration, 19.3 kg of C6H, 0.20 kg of methanol, 0.083 kg of PFBE, 0.0195 kg of diene, 2.3 kg of TFE and 0.13 kg of E were charged at room temperature. Then, the temperature was raised to 66°C, and 80 mL of a 2 mass% solution (solvent: C6H) of t-butyl peroxypivalate (10-hour half-life temperature: 55°C) was charged to initiate polymerization. As the pressure decreases along with the progress of polymerization, a mixed gas of TFE and E (TFE/E = 54/ 46 molar ratio) was continuously charged so that the pressure would be constant. PFBE was continuously charged at a proportion of 1.5 mol% to the mixed gas. The diene was continuously charged at a ratio corresponding to 0.6 mol% to the mixed gas. At the time when the amount of the mixed gas charged became 1.5 kg, the internal temperature was cooled to room temperature, an unreacted gas was released, and the pressure container was opened. The content in the pressure container was washed with C6H, filtered through a glass filter and dried to obtain 1.5 kg of copolymer (A-c).

In the copolymer (A-c), the molar ratio of TFE units/E units/PFBE units/diene units was 54.0/46.0/1.53/0.60. The melting point was 253°C, and MFR was 0 dg/min.

[Example 1]

Using Laboplastmill (LABO PLASTOMILL, manufactured by Toyo Seiki Seisaku-Sho, Ltd., Roller mixer: R-30), the composition (X--1) and the copolymer (B-1) were dry-blended in a blend ratio shown in Table 2 and melt kneaded at 300°C at 100 rpm for 10 minutes to obtain a composition (composition 1).

Then, using Laboplastmill (LABO PLASTOMILL, manufactured by Toyo Seiki Seisaku-Sho, Ltd., Roller mixer: R-30), 100 parts by mass of the composition 1 and 1 part by mass of boron nitride (UHP-S1, manufactured by Showa Denko K.K.) as a nucleating agent, were dry-blended and melt-kneaded at 300°C at 100 rpm for 10 minutes to obtain a nucleating agent-blended composition.

[Example 2]

A composition (composition 2) and a nucleating agent-blended composition were obtained in the same manner as in Example 1 except that the blend ratio was changed as shown in Table 2.

[Comparative Example 1]

A composition (composition 3) and a nucleating agent-blended composition were obtained in the same manner as in Example 1 except that copolymer (A-a) was used in place of the composition (X-1), and the blend ratio was changed as shown in Table 2.

[Comparative Example 2]

A composition (composition 4) and a nucleating agent-blended composition were obtained in the same manner as in Example 1 except that copolymer (A-b) was used in place of the composition (X-1), and the blend ratio was changed as shown in Table 2.

[Comparative Example 3]

A composition (composition 5) and a nucleating agent-blended composition were obtained in the same manner as in Example 1 except that copolymer (A-c) was used in place of the composition (X-1), and the blend ratio was changed as shown in Table 2.

[Comparative Example 4]

A composition (composition 6) and a nucleating agent-blended composition were obtained in the same manner as in Example 1 except that the blend ratio of the composition (X-1) to copolymer (B-1) was changed as shown in Table 2.

In Table 1, the composition and MFR of each of the composition (X-1) and the copolymers (B-1), (A-a) to (A-c) are shown.

In Table 2, the blend ratio in each of the compositions 1 to 6 composed solely of copolymers in each Example, the estimated value of the mass ratio (A:B) of the copolymer (A) to the copolymer (B) in each composition, the content of insoluble component in each composition as actually measured, the composition of insoluble component, MFR, the storage modulus G', loss elastic modulus G" and loss tangent tanδ, are shown.

In Table 3, the evaluation results of X/W of the composition having a nucleating agent blended, as obtained in each Example, the foaming state, fish eyes, and the MIT flex number, are shown.

Here, the estimated value of A:B was obtained, in Example using the composition (X-1), from the mass of the copolymer (A) and the mass of the copolymer (B) obtained by the following formulae and the above blend ratio. In Example using the copolymer (A-a), (A-b) or (A-c) in place of the composition (X-1), the mass ratio of the copolymer (A-a), (A-b) or (A-c) to the copolymer (B-1) was used as it is, as the value of A:B.

(Mass of the polymer (A)) = (mass of the composition (X-1) × {(total mass of TFE and E charged after the addition of diene)/(total mass of TFE and E charged after initiation of polymerization)}

(Mass of the copolymer (B)) = (mass of the composition (X-1)) - (mass of the copolymer (A))

[Table 1]

|  | Composition (molar ratio) | | | | MFR |
|---|---|---|---|---|---|
|  | TFE | E | PFBE | Diene | dg/min |
| Composition (X-1) | 54.0 | 46.0 | 1.53 | 0.20 | 5 |
| Copolymer (B-1) | 54.0 | 46.0 | 1.50 | - | 34 |
| Copolymer (A-a) | 54.0 | 46.0 | 1.53 | 0.06 | 0 |
| Copolymer (A-b) | 54.0 | 46.0 | 1.53 | 0.05 | 2 |
| Copolymer (A-c) | 54.0 | 46.0 | 1.53 | 0.60 | 0 |

[Table 2]

| | Composition | Blend ratio [mass ratio] (Estimated value of A:B) | Content of insoluble component (mass%) | Insoluble component (copolymer (A)) | | | | | | | |
|---|---|---|---|---|---|---|---|---|---|---|---|
| | | | | Composition (molar ratio) | | | | MFR | Storage modulus G' | Loss modulus G" | Loss tangent $\tan\delta$ |
| | | | | TFE | E | PFBE | Diene | dg/min | Pa | Pa | (=G"/G') |
| Ex.1 | Composition 1 | X-1:B-1=21:79 (A:B=7:93) | 6.5 | 54.0 | 46.0 | 1.53 | 0.60 | 0 | $3.3\times10^{19}$ | $1.7\times10^{18}$ | $5.2\times10^{-2}$ |
| Ex.2 | Composition 2 | X-1:B-1=30:70 (A:B=10:90) | 10 | 54.0 | 46.0 | 1.50 | 0.60 | 0 | $3.3\times10^{19}$ | $1.7\times10^{18}$ | $5.2\times10^{-2}$ |
| Comp. Ex.1 | Composition 3 | A-a:B-1=7:93 (A:B=7:93) | 6.3 | - (=A-a) | | | | | $4.5\times10^{4}$ | $2.8\times10^{4}$ | $6.2\times10^{-1}$ |
| Comp. Ex.2 | Composition 4 | A-b:B-1=10:90 (A:B=10:90) | <0.1 | - (=A-b) | | | | | $4.0\times10^{4}$ | $2.4\times10^{4}$ | $6.1\times10^{-1}$ |
| Comp. Ex.3 | Composition 5 | A-c:B-1=7:93 (A:B=7:93) | 6.7 | - (=A-c) | | | | | $3.2\times10^{19}$ | $1.7\times10^{18}$ | $5.3\times10^{-2}$ |
| Comp. Ex.4 | Composition 6 | X-1 :B-1 =9:91 (A:B=3:97) | 2.8 | 54.0 | 46.0 | 1.50 | 0.60 | 0 | $3.3\times10^{19}$ | $1.7\times10^{18}$ | $5.2\times10^{-2}$ |

[Table 3]

| | | Load W | Melt tension X | X/W | Evaluation of foamed state | | Fish eyes | MIT |
|---|---|---|---|---|---|---|---|---|
| | Composition [mass ratio] | [N] | [mN] | [N/N]=[-] | Condition | Result | Number/cm$^2$ | [times] |
| Ex.1 | Composition 1: Nucleating agent = 100:1 | 221 | 14 | $6.3 \times 10^{-5}$ | 1 to 6 | All uniform | 0 | 20,000 |
| Ex.2 | Composition 2: Nucleating agent = 100:1 | 245 | 20 | $8.2 \times 10^{-5}$ | 1 | Uniform | 0 | 17,000 |
| Comp. Ex.1 | Composition 3: Nucleating agent = 100:1 | 186 | 7 | $3.8 \times 10^{-5}$ | 1 to 6 | All uniform | 90 | 20,000 |
| Comp. Ex.2 | Composition 4: Nucleating agent = 100:1 | 202 | 7 | $3.5 \times 10^{-5}$ | 1 | Non-uniform | 0 | 25,000 |
| Comp. Ex.3 | Composition 5: Nucleating agent = 100:1 | 196 | 11 | $5.6 \times 10^{-5}$ | 1 | Uniform | 45,000 | 9,000 |
| Comp. Ex.4 | Composition 6: Nucleating agent = 100:1 | 181 | 7 | $3.9 \times 10^{-5}$ | 1 | Non-uniform | 0 | 17,000 |

With the nucleating agent-blended compositions in Examples 1 and 2 obtained by blending the composition (X-1) and the copolymer (B-1), X/W was large, the foaming state evaluation results were uniform, and they were excellent in elongation deformability. Further, the number of fish eyes was small. Further, the MIT flex number was large, and they were excellent in mechanical strength. The reason for the small number of fish eyes and excellent mechanical strength, is considered to be such that the distribution state of ETFE having a branch structure introduced therein (the copolymer (A)) in the composition was good.

With the nucleating agent-blended compositions in Comparative Examples 1 and 2 wherein instead of the composition (X-1), the copolymer (A-a) or (A-b) was used which was obtained by carrying out polymerization with a diene charged from the beginning, as compared with Examples 1 and 2, X/W was small, the foaming state evaluation results were uneven, and they were inferior in elongation deformability.

With the nucleating agent-blended composition in Comparative Example 3 wherein instead of the composition (X-1), the copolymer (A-c) was used which was obtained in the same manner as the copolymer (A-a) or the copolymer (A-b) except that the proportion of diene was increased, the number of fish eyes were large. Further, as compared with Examples 1 to 2, the MIT flex number was small, and the mechanical strength was inferior.

With the nucleating agent-blended composition in Comparative Example 4 which was obtained by blending the composition (X-1) and the copolymer (B-1) so that the insoluble component content would be 2.8 mass%, as compared with Examples 1 to 2, X/W was small, the foaming state evaluation results were uneven, and the elongation deformability was inferior.

The entire disclosures of Japanese Patent Application No. 2014-138959 filed on July 4, 2014 and Japanese Patent Application No. 2015-104739 filed on May 22, 2015 including specifications, claims and summaries are incorporated herein by reference in their entireties.

**Claims**

1. A fluororesin composition made of a non-melt microblend of the following copolymer (A) and the following copolymer (B), wherein the proportion of the copolymer (A) to the total amount of the copolymer (A) and the copolymer (B) in the non-melt microblend is from 4 to 70 mass%:

Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%,

Copolymer (B): a copolymer comprising units derived from the following monomer (a) and units derived from the following monomer (b) and containing substantially no units derived from the following monomer (c), wherein the molar ratio [units derived from monomer (a)/units derived from monomer (b)] of units derived from the monomer (a) to units derived from the monomer (b) is from 20/80 to 80/20,

Monomer (a): tetrafluoroethylene,
Monomer (b): ethylene,
Monomer (c): a monomer having two or more polymerizable carbon-carbon double bonds.

2. The fluororesin composition according to Claim 1, wherein the monomer (c) is a compound represented by the following formula (c1):

$$Y^1\text{-}R^f\text{-}Z^1 \qquad (c1)$$

wherein $R^f$ is a fluoroalkylene group, and $Y^1$ and $Z^1$ are each independently a vinyl group, a trifluorovinyl group or a trifluorovinyloxy group.

3. The fluororesin composition according to Claim 1 or 2, wherein the monomer (c) is a compound represented by $CH_2$=CH-$(CF_2)_{n2}$-CH=$CH_2$ (wherein n2 is 4 or 6).

4. The fluororesin composition according to any one of Claims 1 to 3, wherein the following melt flow rate of the copolymer (A) is at most 0.5 dg/min:

Melt flow rate: the mass of the copolymer (A) flowing out from an orifice having a diameter of 2 mm and a length of 8 mm for 10 minutes, as measured under conditions of a temperature of 297°C and a load of 49 N, in accordance with ASTM D 3159-10.

5. The fluororesin composition according to any one of Claims 1 to 4, wherein the non-melt microblend is a copolymer mixture obtained by forming the copolymer (A) by copolymerizing the monomer (a), the monomer (b) and the monomer (c) in the presence of the copolymer (B).

6. A second fluororesin composition **characterized by** comprising a first fluororesin composition as defined in any one of Claims 1 to 5 and the copolymer (B), wherein the proportion of the copolymer (A) to the total of the copolymer (A) and the copolymer (B) is from 4 to 30 mass%.

7. The fluororesin composition according to Claim 6, wherein the second fluororesin composition is a melt-kneaded product of said first fluororesin composition and said copolymer (B).

8. A fluororesin composition comprising the following copolymer (A) and the following copolymer (B), wherein the proportion of the copolymer (A) to the total amount of the copolymer (A) and the copolymer (B) is from 4 to 30 mass%, and the number of the following fish eyes is less than 200/m$^2$:

Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%, and the following melt flow rate is at most 0.5 dg/min:

Copolymer (B): a copolymer comprising units derived from the following monomer (a) and units derived from the following monomer (b) and containing substantially no units derived from following monomer (c), wherein the molar ratio [units derived from monomer (a)/units derived from monomer (b)] of units derived from the monomer (a) to units derived from the monomer (b) is from 20/80 to 80/20:

Monomer (a): tetrafluoroethylene,

Monomer (b): ethylene,

Monomer (c): a monomer having two or more polymerizable carbon-carbon double bonds,

Melt flow rate: the mass of the copolymer (B) flowing out from an orifice having a diameter of 2 mm and a length of 8 mm for 10 minutes, as measured under conditions of a temperature 297°C and a load of 49 N in accordance with ASTM D 3159-10,

Fish eyes: using a single screw extruder (manufactured by Tanabe Plastics Machinery Co., Ltd.), the fluororesin composition is extrusion-molded under the following film forming conditions to prepare a film having a thickness of 200 $\mu$m, whereupon the number of fish eyes with a size of at least 0.05 mm$^2$ present in a region with an area of 0.25 m$^2$ randomly selected from the surface of said film, is visually measured, and the measured number is quadrupled to calculate the number (number/m$^2$) of fish eyes per 1 m$^2$,

(Film forming conditions)

Temperature: C1/C2/C3/die = 300°C/300°C/300°C/300°C,

L/D: 25,

cylinder diameter: 30 mm,

screw: full flight,

compression ratio: 3.2,

screw rotation speed: 14 rpm,

die width: 150 mm,

air gap: 23 mm,

take-up speed: 1 m/min,

roll temperature: 150°C,

discharge rate: 3 kg/hr.

9. A method for producing a fluororesin composition, **characterized by** forming the following copolymer (A) by copolymerizing the following monomer (a), the following monomer (b) and the following monomer (c) in a polymerization system where the following copolymer (B) is present:

Copolymer (A): a copolymer comprising units derived from the following monomer (a), units derived from the following monomer (b) and units derived from the following monomer (c), wherein the molar ratio [units derived from monomer (a) to units derived from monomer (b)] of units derived from the monomer (a) to units derived from the monomer (b) is from 20/80 to 80/20, and the proportion of units derived from the monomer (c) to all units is from 0.2 to 3 mol%,

Copolymer (B): a copolymer comprising units derived from the following monomer (a), units derived from the following monomer (b) and containing substantially no units derived from following monomer (c), wherein the molar ratio [units derived from monomer (a) to units derived from monomer (b)] of units derived from the monomer (a) to units derived from the monomer (B) is from 20/80 to 80/20,

Monomer (a): tetrafluoroethylene,

Monomer (b): ethylene,

Monomer (c): a monomer having two or more polymerizable carbon-carbon double bonds.

10. The method for producing a fluororesin composition according to Claim 9, wherein a monomer mixture comprising the monomer (a) and the monomer (b) and containing substantially no monomer (c) is polymerized to form the copolymer (B), and then, polymerization is conducted by supplying a monomer mixture comprising the monomer (a), the monomer (b) and the monomer (c) to the polymerization system where the copolymer (B) is present, to form the copolymer (A).

11. The method for producing a fluororesin composition according to Claim 9 or 10, wherein in fluororesin composition, the proportion of the copolymer (A) to the total of the copolymer (A) and the copolymer (B) is from 4 to 70 mass%.

12. A method for producing a fluororesin composition, **characterized by** melt-kneading the first fluororesin composition obtained by the method for producing a fluororesin composition as defined in any one of Claims 9 to 11 and the copolymer (B), to produce a second fluororesin composition wherein the proportion of the copolymer (A) to the total of the copolymer (A) and the copolymer (B) is from 4 to 30 mass%.

13. A molded product made of the fluororesin composition as defined in any one of Claims 1 to 8.

**14.** A foamed molded product made of the fluororesin composition as defined in any one of Claims 1 to 8.

**15.** A covered electric wire having a coating layer made of the fluororesin composition as defined in any one of Claims 1 to 8.

**EP 3 165 568 A1**

## INTERNATIONAL SEARCH REPORT

International application No.

PCT/JP2015/069153

### A. CLASSIFICATION OF SUBJECT MATTER

*C08L27/18*(2006.01)i, *C08F259/08*(2006.01)i, *C08J9/12*(2006.01)i, *C08L51/00* (2006.01)i, *H01B7/02*(2006.01)i

According to International Patent Classification (IPC) or to both national classification and IPC

### B. FIELDS SEARCHED

Minimum documentation searched (classification system followed by classification symbols)
C08K3/00-13/08, C08L1/00-101/14, C08C19/00-19/44, C08F6/00-246/00, C08F301/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| A | JP 2003-183466 A (Asahi Glass Co., Ltd.),<br>03 July 2003 (03.07.2003),<br>entire text<br>(Family: none) | 1-15 |
| A | JP 2006-052399 A (Solvay Solexis S.p.A.),<br>23 February 2006 (23.02.2006),<br>entire text<br>& US 2006/0025529 A1     & EP 1621558 A2 | 1-15 |
| A | WO 2009/096547 A1 (Asahi Glass Co., Ltd.),<br>06 August 2009 (06.08.2009),<br>entire text<br>& US 2010/0204423 A1     & EP 2239282 A1 | 1-15 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    26 August 2015 (26.08.15) | Date of mailing of the international search report<br>    08 September 2015 (08.09.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

28

**INTERNATIONAL SEARCH REPORT**

International application No.

PCT/JP2015/069153

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-021054 A  (Asahi Glass Co., Ltd.), 02 February 2012 (02.02.2012), entire text (Family: none) | 1-15 |
| A | WO 2001/018824 A1  (JUDD WIRE, INC.), 15 March 2001 (15.03.2001), entire text & AU 1105801 A | 1-15 |
| A | JP 62-093806 A  (Raychem Corp.), 30 April 1987 (30.04.1987), entire text & US 5059483 A          & EP 222507 A1 | 1-15 |
| A | JP 03-231952 A  (Hitachi Cable, Ltd.), 15 October 1991 (15.10.1991), entire text (Family: none) | 1-15 |
| A | JP 07-033938 A  (Sumitomo Electric Industries, Ltd.), 03 February 1995 (03.02.1995), entire text (Family: none) | 1-15 |
| A | JP 2011-052063 A  (Sumitomo Electric Industries, Ltd., Sumitomo Electric Fine Polymer Inc.), 17 March 2011 (17.03.2011), entire text & US 2011/0213089 A1    & WO 2011/024610 A1 | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009096544 A
- WO 2009096547 A
- JP 2012525288 A
- JP 2012519535 A
- JP 2012526937 A
- JP 2014005471 A
- JP 2014513734 A
- JP 2014525847 A
- JP 2012512770 A
- JP 2014138959 A
- JP 2015104739 A

**Non-patent literature cited in the description**

- **SATORU IMAI et al.** Effects of long chain branching of ETFE on the melt viscosity characteristics. *19th Plastic Molding Society Fall Meeting, Molding Symposia '11 Proceedings,* 2011, 347-348